# EUROPÄISCHE PATENTSCHRIFT

(11) **EP 2 644 504 B1**
(45) Veröffentlichungstag und Bekanntmachung des Hinweises auf die Patenterteilung: **22.05.2019**
(21) Anmeldenummer: 13001531.6
(22) Anmeldetag: 25.03.2013
(51) Int. Cl.: B64D 11/06, B64D 11/00

(54) **Fluggastsitz**
Aircraft passenger seat
Siège pour passager d'aeronef

(30) Priorität: 26.03.2012 DE 202012003008 U; 26.03.2012 DE 202012003042 U
(43) Veröffentlichungstag der Anmeldung: 02.10.2013
(73) Patentinhaber: ZIM Flugsitz GmbH, 88677 Markdorf (DE)
(72) Erfinder: Zimmermann, Angelika, 88677 Markdorf (DE); Salzer, Uwe, 88048 Friedrichshafen (DE)
(74) Vertreter: Otten, Roth, Dobler & Partner mbB Patentanwälte

(56) Entgegenhaltungen:
- EP-A2- 1 078 852
- WO-A2-2004/076279
- DE-A1-102008 052 841
- US-A1- 2006 163 917
- US-A1- 2007 247 836

## Beschreibung

Die Erfindung betrifft einen Fluggastsitz nach den Merkmalen des Anspruchs 1.

Um den Komfort für Fluggäste zu erhöhen, ist es bekannt, Sitzeinrichtungen von Flugzeugen für Fluggäste mit Verstaueinrichtungen und Ablagen auszustatten. Darüber hinaus können weitere Raumbereiche von einem Fluggastsitz begrenzt sein, die ein Fluggast oder Begleitpersonal für ein Verstauen oder Eingreifen nutzen kann. Aus der US 2006/0163917 A1 ist ein Fluggastsitz bekannt, welcher eine Unterbaukonstruktion aufweist, worauf eine Sitzfläche des Fluggastsitzes angeordnet ist. Die Unterbaukonstruktion umfasst einen Hohlraum zur Aufnahme von Handgepäckstücken, wobei der Hohlraum eine Beleuchtungseinrichtung aufweist.

Aufgabe der vorliegenden Erfindung ist es, die Nutzbarkeit von Raumbereichen zum Verstauen und Eingreifen, die an einem Fluggastsitz ausgebildet sind, zu erleichtern, insbesondere bei Nachtflügen oder wenn die Helligkeit nicht ausreichend ist.

Die Aufgabe wird erfindungsgemäß mit einem Fluggastsitz mit den Merkmalen des Anspruchs 1 und jenen des Anspruchs 2 gelöst.

Bevorzugte und vorteilhafte Ausführungen der Erfindung werden in den Unteransprüchen aufgeführt.

Die Erfindung geht von einem Fluggastsitz mit wenigstens einem Sitzplatz aus. Der Kern der Erfindung besteht darin, dass zumindest eine Verstaueinrichtung am Fluggastsitz mit Beleuchtungsmitteln ausgestattet ist, mit denen ein vorgegebener Bereich der Verstaueinrichtung beleuchtbar ist. Durch Beleuchtung der Verstaueinrichtung ist für einen Fluggast erleichtert sichtbar, ob ein z.B. Stauraum belegt ist und wo sich darin Gegenstände befinden. Insbesondere bei vergleichsweise tief eingewölbten Verstaueinrichtungen kann ein Stauraum auch bei vergleichsweise guter Ausleuchtung einer Fluggastkabine schwer einsehbar sein, so dass Beleuchtungsmittel für eine Beleuchtung des Stauraums dessen Nutzung verbessern können.

Der Fluggastsitz kann einen einzelnen Sitzplatz aufweisen, dessen Sitzfläche von ein oder zwei Seitenelementen begrenzt ist. Des Weiteren kann der Fluggastsitz mehrere Sitzplätze aufweisen, wobei zwischen z.B. je zwei Sitzplätze jeweils eine Mittel- bzw. Zwischenkonsole angeordnet sein kann. An den äußeren Sitzplätzen kann eine Sitzfläche von einem Seitenelement z.B. zu einem Kabinengang hin begrenzt sein. An einem Seitenelement kann eine Armlehne ausgebildet sein. An einer Mittel- bzw. Zwischenkonsole sind vorzugsweise zwei Armlehnen ausgebildet.

Die Verstaueinrichtung kann ein Staufach neben der Sitzfläche sein, die z.B. in einem Seitenelement oder z.B. in einer Zwischenkonsole, insbesondere unterhalb einer Armlehne, ausgebildet ist.

Die Beleuchtungsmittel können ein oder mehrere Leuchtelemente wie z.B. eine elektrische Glühbirne oder z.B. eine Leuchtdiode umfassen. Dabei werden hier unter Beleuchtungsmittel auch Mittel verstanden, mit denen eine Abstrahlung von Licht z.B. in eine vorgegebene Richtung, mit z.B. einem Spiegelelement oder z.B. einem Lichtleiterelement, ausrichtbar ist. Die Beleuchtungsmittel können auch eine Linse einschließen. Die Abstrahlung von Licht kann zudem eine Blende umfassen. Blenden, Spiegel, Lichtleiter und Linsen ermöglichen eine Begrenzung bzw. Konzentration einer Beleuchtung auf einen vorgegebenen Bereich, wodurch ein Fluggast vorteilhaft Beleuchtungsmittel seines Sitzplatzes nutzen kann, ohne dass deren Nutzung benachbarte Fluggäste stört.

Dem Sinn der Erfindung entspricht ebenfalls, dass zumindest ein Eingriffsraum am Fluggastsitz mit Beleuchtungsmitteln ausgestattet ist, mit denen ein vorgegebener Bereich des Eingriffsraums beleuchtbar ist. Durch eine Beleuchtung des Eingriffsraum ist für einen Fluggast vorteilhaft erkennbar, wo und wie ein Eingriffsraum begrenzt ist. Falls einem Fluggast ein Gegenstand abhanden kommt, sind Beleuchtungsmittel für eine Suche in einem insbesondere in Bodennähe befindlichen Eingriffsraum vorteilhaft hilfreich.

Der Eingriffsraum kann ein unterhalb der Sitzfläche zugänglicher Raumbereich sein, der z.B. als Fußraum für einen hinter dem Fluggastsitz sitzenden Fluggast erreichbar ist oder der z.B. als Stauraum für eine auf dem Fluggastsitz sitzende Person vorgesehen ist. Ein Eingriffsraum kann auch eine Ausnehmung an einem Teil des Fluggastsitzes sein. Beispielsweise kann an einem z.B. seitlich angeordneten Element des Fluggastsitzes eine Ausnehmung für einen Eingriff mit einem Fuß ausgebildet sein, die als Trittstufe bzw. Steigtritt die Erreichbarkeit eines Staufachs ermöglicht, das über einem Sitzplatz z.B. an einer Kabinendecke angebracht ist.

Die Beleuchtungsmittel sind vorzugsweise an einer Begrenzung des vorgegebenen Bereichs angebracht, wobei die Begrenzung eine z.B. Seitenwand oder z.B. Decke eines Staufachs sein kann. Des Weiteren kann die Begrenzung beispielsweise eine Unterseite einer Sitzfläche oder z.B. ein bodennaher Abschnitt z.B. eines Seitenteils oder z.B. einer Zwischenkonsole sein. Die Beleuchtungsmittel können zumindest teilweise an einem Zugangs- bzw. Zugriffsbereich eines Eingriffsraums bzw. einer Verstaueinrichtung angeordnet sein. Dabei kann mit Beleuchtungsmittel auch die Lage eines Zugangs- bzw. Zugriffsbereichs für ein erleichtertes Auffinden des vorgegebenen Bereichs markiert sein.

Zum Ein- und Ausschalten einer Beleuchtung des vorgegebenen Bereichs kann ein Betätigungselement, wie eine elektrische z.B. Schalttaste oder z.B. Schaltwippe, am Fluggastsitz angebracht sein. Ein oder mehrere Betätigungselemente können ebenfalls beleuchtbar sein, so dass sie z.B. bei reduzierter Kabinenbeleuchtung vorteilhaft leicht auffindbar sind.

Eine bevorzugte Ausführung der Erfindung besteht darin, dass Sensormittel dazu vorgesehen sind, ein oder mehrere Leuchtelemente der Beleuchtungsmittel für ein Beleuchten des vorgegebenen Bereichs zu aktivieren. Die Sensormittel können z.B. innerhalb eines vorgegebenen Bereichs angeordnet sein. Mit diesen Sensormitteln ist es möglich, eine Beleuchtung erst bei einer Annäherung an bzw. bei einem Hineinreichen in einen vorgegebenen Bereich einer Verstaueinrichtung und/oder eines Eingriffsraumes einzuschalten. Dadurch kann vorteilhaft auf manuelle Betätigungselemente, die an einer vorgegebenen Bedienposition angeordnet sind, verzichtet werden.

Die Sensormittel können einen Sensor für nichtsichtbare Strahlung, insbesondere Infrarotstrahlung umfassen, wodurch Schaltvorgänge an den Beleuchtungsmitteln vorteilhaft ohne Berührung auslösbar sind. Für eine genauere Erkennung einer Schaltbedingung können die Sensormittel eine Lichtquelle für nichtsichtbares Licht umfassen. Dadurch kann z.B. eine Annäherung an und ein Hineinreichen in einen vorgegebenen Bereich vergleichsweise schärfer unterscheidbar sein.

Vorzugsweise ist die Helligkeit der Beleuchtungmittel im eingeschalteten Zustand einstellbar. Dabei kann die Helligkeit stufenweise einstellbar sein. Ebenso kann die Helligkeit z.B. stufenlos einstellbar bzw. dimmbar sein. Dadurch ist die Helligkeit der Beleuchtung vorteilhaft an verschiedene Bedürfnisse nach Sichtbarkeit der Umgebung anpassbar, z.B. wenn die Helligkeit der Kabinenbeleuchtung für eine schlaffördernde Kabinenstimmung abgesenkt ist.

Vorzugsweise sind Beleuchtungsmittel für mehrere vorgegebene, voneinander getrennte Bereiche jeweils separat und unabhängig voneinander, z.B. durch jeweils gesonderte Sensormittel, zu- und abschaltbar. Dies ermöglicht eine energiesparende Beleuchtung und verringert Störungen für benachbarte Passagiere.

Aus dem vorgenannten Grund umfasst die Sitzeinrichtung eine insbesondere elektronische Kontrolleinrichtung, die die Helligkeit der Beleuchtungsmittel im eingeschalteten Zustand an eine Umgebungshelligkeit anpasst. Dazu kann die Kontrolleinrichtung mit einer z.B. Steuerungseinrichtung für die Kabinenbeleuchtung verbunden sein.

Für eine komfortable Bedienbarkeit ist die Kontrolleinrichtung dazu ausgebildet, eine Beleuchtung durch die Beleuchtungsmittel nach einer vorgegebenen Zeit abzuschalten. Dabei kann eine Abschaltung nach Ablauf einer z.B. einstellbaren Zeitspanne seit einem Einschalten vorgesehen sein. Vorzugsweise ist die Kontrolleinrichtung derart ausgebildet, dass eine Abschaltung der Beleuchtungsmittel an den Ablauf einer Zeitspanne gekoppelt ist, der mit einem Wegfall der Einschaltbedingung, z.B. durch Herausziehen einer Hand aus dem vorgegebenen Bereich beginnt.

Nachfolgend wird die Erfindung anhand eines Ausführungsbeispiels mit Hilfe der Zeichnungen erläutert. Es zeigen:
- Figur 1: schematische perspektivische Ansicht eines erfindungsgemäßen Flugzeugsitzes,
- Figur 2: schematische perspektivische Ansicht des Flugzeugsitzes.

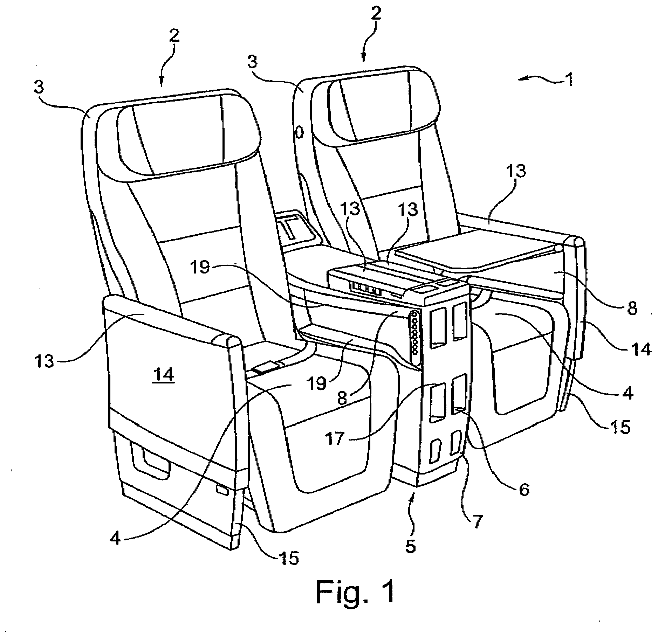

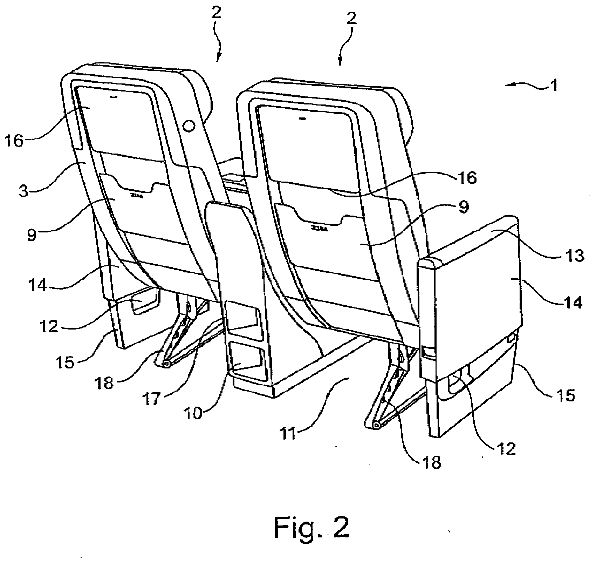

In den Figuren 1 und 2 ist ein Ausführungsbeispiel eines erfindungsgemäßen Fluggastsitzes 1 gezeigt. Der Fluggastsitz 1 weist zwei Sitzplätze 2 mit jeweils einer Sitzfläche 4 und einer Rückenlehne 3 auf. Die beiden Sitzplätze 2 sind durch eine Mittelkonsole 5 voneinander getrennt und an der Außenseite durch ein Seitenelement 14, das an einem Sockel 15 befestigt ist, begrenzt.

Im Sockel 15 ist jeweils ein Steigtritt in Form einer Ausnehmung 12 ausgebildet.

Der Fluggastsitz 1 bietet Fluggästen (nicht gezeigt) mehrere Verstaumöglichkeiten. So sind an der Mittelkonsole 5 frontseitig Staufächer 6 und Schubladen 7 angeordnet. Seitlich neben den Sitzflächen 4 befinden sich jeweils in der Mittelkonsole 5 und dem Seitenelement 14 Staufächer 8, wobei der Staufachboden 19 eine schalenförmige Vertiefung aufweisen kann. Für dahinter sitzende Personen sind an der Rückseite des Fluggastsitzes 1 gemäß Figur 2 weitere Verstaumöglichkeiten ausgebildet. So ist in die Rückenlehne 3 ein Literaturfach 9 integriert und die Mittelkonsole 5 besitzt weitere Staufächer 10 an deren Rückseite.

Um in den verschiedenen Stauräumen des Fluggastsitzes 1 Fluggästen eine leichte Orientierung zu bieten, sind diese erfindungsgemäß mit Beleuchtungsmitteln 17, 19 ausgestattet, wobei diese vorzugsweise derart angeordnet sind, dass die Beleuchtungsmittel 17, 19 möglichst wenig oder gar kein Licht bei bequemer Sitzhaltung in Richtung der Augen oder des Gesichtes abstrahlen. So sind beispielsweise Leuchtmittel (nicht gezeigt) für die Staufächer 8 in den Seitenelementen und der Mittelkonsole in die Armlehnen 13, an deren Unterseite integriert, so dass diese im Wesentlichen nach unten in den Stauraum des Staufachs 8 hinein leuchten. Ebenso können in den Staufächern 6 an der Frontseite der Mittelkonsole 5 Leuchtmittel (nicht gezeigt) an einer Oberseite der Staufächer 6 in deren Innerem untergebracht sein.

Um die Staufächer 6, 7 der Frontseite der Mittelkonsole auch bei reduzierter bzw. abgeschalteter Kabinenbeleuchtung leicht auffinden zu können, können die Staufächer 6, 7 an der Frontseite der Mittelkonsole 5 mit Leuchtrahmen 17, beispielsweise aus einem lichtleitenden Material, zur Erkennung erhellt sein. Für eine schnelle Erkennung der Steigtritte 12 können in die Seitenelemente 14 Beleuchtungsmittel (nicht gezeigt) im Bereich der Steigtritte 12 untergebracht sein, die in die Aussparung und auf die Trittfläche des Steigtritts 12 hinein leuchten.

Ein weiterer Eingriffsraum befindet sich am Fluggastsitz 1 unterhalb der Sitzflächen 4, der als Fußraum 11 für dahinter sitzende Passagiere vorgesehen ist. Zur Beleuchtung des Fußraums 11 von einer Unterseite einer Sitzfläche 4 können Leuchtelemente (nicht gezeigt) angebracht sein. Dadurch sind für einen Fluggast Sitzteile, zum Beispiel eine Stütze 18, besser erkennbar, wodurch sich gegebenenfalls Verletzungen vermeiden lassen. Für eine bequeme Bedienbarkeit kann im Bereich des Fußraums 11 ein zum Beispiel Bewegungssensor (nicht gezeigt) angebracht sein, mit dem die Leuchtmittel einschaltbar sind.

### Bezugszeichenliste:

- 1: Fluggastsitz
- 2: Sitzplatz
- 3: Rückenlehne
- 4: Sitzfläche
- 5: Mittelkonsole
- 6: Staufach
- 7: Schublade
- 8: Staufach (neben Sitzfläche)
- 9: Literaturfach
- 10: Staufach (Rückseite der M-Konsole)
- 11: Fußraum
- 12: Steigtritt
- 13: Armlehne
- 14: Seitenelement
- 15: Sockel
- 16: Display
- 17: Leuchtrahmen
- 18: Stütze
- 19: Leuchtschiene

## Patentansprüche

1. Fluggastsitz (1) mit wenigstens einem Sitzplatz (2), wobei zumindest eine Verstaueinrichtung (6, 7, 8, 9, 10) am Fluggastsitz (1) mit Beleuchtungsmitteln (17, 19) ausgestattet ist, mit denen ein vorgegebener Bereich der Verstaueinrichtung (6, 7, 8, 9, 10) beleuchtbar ist, **dadurch gekennzeichnet, dass** der Fluggastsitz (1) eine Kontrolleinrichtung umfasst, die die Helligkeit der Beleuchtungsmittel (17, 19) im eingeschalteten Zustand an eine Umgebungshelligkeit anpasst.

2. Fluggastsitz (1) mit wenigstens einem Sitzplatz (2), insbesondere nach Anspruch 1, wobei zumindest ein Eingriffsraum (11, 12) am Fluggastsitz (1) mit Beleuchtungsmitteln (17, 19) ausgestattet ist, mit denen ein vorgegebener Bereich des Eingriffsraums (11, 12) beleuchtbar ist, wobei der Fluggastsitz (1) eine Kontrolleinrichtung umfasst, die die Helligkeit der Beleuchtungsmittel (17, 19) im eingeschalteten Zustand an eine Umgebungshelligkeit anpasst.

3. Fluggastsitz (1) nach einem der vorgenannten Ansprüche, **dadurch gekennzeichnet, dass** Sensormittel dazu vorgesehen sind, ein oder mehrere Leuchtelemente der Beleuchtungsmittel (17, 19) für ein Beleuchten des vorgegebenen Bereichs zu aktivieren

4. Fluggastsitz (1) nach einem der Ansprüche 1 oder 2, **dadurch gekennzeichnet, dass** die Beleuchtungsmittel (17, 19) Verblendungselemente umfassen, die eine direkte Beleuchtung mit sichtbarem Licht auf einen vorgegebenen Bereich beschränken.

5. Fluggastsitz (1) nach einem der Ansprüche 1 oder 2, **dadurch gekennzeichnet, dass** die Beleuchtungsmittel (17, 19) ein Lichtleitelement (17) umfassen.

6. Fluggastsitz (1) nach einem der vorgenannten Ansprüche, **dadurch gekennzeichnet, dass** die Sensormittel einen Sensor für nichtsichtbare Strahlung umfassen.

7. Fluggastsitz (1) nach einem der vorgenannten Ansprüche, **dadurch gekennzeichnet, dass** die Sensormittel eine Lichtquelle für nichtsichtbares Licht umfassen.

8. Fluggastsitz (1) nach einem der vorgenannten Ansprüche, **dadurch gekennzeichnet, dass** die Sensormittel derart ausgebildet sind, dass bei einer Erkennung eines Eingriffs in den vorgegebenen Bereich die Beleuchtungsmittel (17, 19) zur Ausleuchtung eingeschaltet werden.

9. Fluggastsitz (1) nach einem der vorgenannten Ansprüche, **dadurch gekennzeichnet, dass** die Sensormittel derart ausgebildet sind, dass bei einer Erkennung einer Annäherung an den vorgegebenen Bereich die Beleuchtungsmittel (17, 19) zur Ausleuchtung eingeschaltet werden.

10. Fluggastsitz (1) nach einem der vorgenannten Ansprüche, **dadurch gekennzeichnet, dass** Beleuchtungsmittel (17, 19) für mehrere vorgegebene, voneinander getrennte Bereiche jeweils separat und unabhängig voneinander zu- und abschaltbar sind.

11. Fluggastsitz (1) nach einem der vorgenannten Ansprüche, **dadurch gekennzeichnet, dass** die Kontrolleinrichtung dazu ausgebildet ist, eine Beleuchtung durch die Beleuchtungsmittel (17, 19) nach einer vorgegebenen Zeit abzuschalten.

12. Fluggastsitz (1) nach einem der vorgenannten Ansprüche, **dadurch gekennzeichnet, dass** Schaltmittel vorgesehen sind, mit denen die Beleuchtungsmittel (17, 19) manuell einstellbar sind.

13. Fluggastsitz (1) nach einem der vorgenannten Ansprüche, **dadurch gekennzeichnet, dass** Schaltmittel vorgesehen sind, mit denen eine Helligkeit der Beleuchtungsmittel (17, 19) einstellbar ist.

14. Fluggastsitz (1) nach einem der vorgenannten Ansprüche, **dadurch gekennzeichnet, dass** der vorgegebene Bereich unter der Sitzfläche (4) angeordnet ist.

15. Fluggastsitz (1) nach einem der vorgenannten Ansprüche, **dadurch gekennzeichnet, dass** der vorgegebene Bereich eine Ausnehmung (12) für eine Steighilfe ist.

## Claims

1. Aircraft passenger seat (1) with at least one seat (2), wherein at least one stowing device (6, 7, 8, 9, 10) on the aircraft passenger seat (1) is equipped with lighting units (17, 19), by means of which a specified area of the stowing device (6, 7, 8, 9, 10) can be illuminated, **characterised in that** the aircraft passenger seat (1) comprises a control device which adjusts the brightness of the lighting units (17, 19) when switched on to an environmental brightness.

2. Aircraft passenger seat (1) with at least one seat (2), in particular according to claim 1, wherein at least one intervention space (11, 12) on the aircraft passenger seat (1) is equipped with lighting units (17, 19), by means of which a specified area of the intervention space (11, 12) can be illuminated, wherein the aircraft passenger seat (1) comprises a control device, which adjusts the brightness of the lighting units (17, 19) when switched on to an environmental brightness.

3. Aircraft passenger seat (1) according to any of the preceding claims, **characterised in that** sensor means are provided to activate one or more lighting elements of the lighting units (17, 19) for illuminating the specified area.

4. Aircraft passenger seat (1) according to any of claims 1 or 2, **characterised in that** the lighting units (17, 19) comprise facing elements which limit direct illumination with visible light to a specified area.

5. Aircraft passenger seat (1) according to any of claims 1 or 2, **characterised in that** the lighting units (17, 19) comprise a light guiding element (17).

6. Aircraft passenger seat (1) according to any of the preceding claims, **characterised in that** the sensor means comprise a sensor for invisible radiation.

7. Aircraft passenger seat (1) according to any of the preceding claims, **characterised in that** the sensor means comprise a light source for invisible light.

8. Aircraft passenger seat (1) according to any of the preceding claims, **characterised in that** the sensor means are designed such that on detection of an intervention in the specified area the lighting units (17, 19) are switched on for illumination.

9. Aircraft passenger seat (1) according to any of the preceding claims, **characterised in that** the sensor means are designed such that on detection of an approach to the specified area the lighting units (17, 19) are switched on for illumination.

10. Aircraft passenger seat (1) according to any of the preceding claims, **characterised in that** lighting units (17, 19) for a plurality of specified, separate areas can be switched on and off separately and independently of one another respectively.

11. Aircraft passenger seat (1) according to any of the preceding claims, **characterised in that** the control device is designed to switch off the lighting of the lighting units (17, 19) after a specified period.

12. Aircraft passenger seat (1) according to any of the preceding claims, **characterised in that** switching means are provided, by means of which the lighting units (17, 19) can be manually adjusted.

13. Aircraft passenger seat (1) according to any of the preceding claims, **characterised in that** switching means are provided, by means of which the brightness of the lighting units (17, 19) can be adjusted.

14. Aircraft passenger seat (1) according to any of the preceding claims, **characterised in that** the specified area is arranged underneath the seating surface (4).

15. Aircraft passenger seat (1) according to any of the preceding claims, **characterised in that** the specified area is a recess (12) for a climbing aid.

## Revendications

1. Siège passager (1) avec au moins un siège (2), dans lequel au moins un dispositif de rangement (6, 7, 8, 9, 10) sur le siège passager (1) est équipé de moyens d'éclairage (17, 19) avec lesquels une zone prédéterminée du dispositif de rangement (6, 7, 8, 9, 10) peut être éclairée, **caractérisé en ce que** le siège passager (1) comprend un dispositif de contrôle qui adapte la luminosité des moyens d'éclairage (17, 19), à l'état allumé, à une luminosité ambiante.

2. Siège passager (1) avec au moins un siège (2), en particulier selon la revendication 1, dans lequel au moins un espace d'engagement (11, 12) sur le siège passager (1) est équipé de moyens d'éclairage (17, 19) avec lesquels une zone prédéterminée de l'espace d'engagement (11, 12) peut être éclairée, le siège passager (1) comprenant un dispositif de contrôle qui adapte la luminosité des moyens d'éclairage (17, 19), à l'état allumé, à une luminosité ambiante.

3. Siège passager (1) selon l'une des revendications précédentes, **caractérisé en ce que** des moyens capteurs sont prévus pour activer un ou plusieurs éléments d'éclairage des moyens d'éclairage (17, 19) afin d'éclairer la zone prédéterminée.

4. Siège passager (1) selon l'une des revendications 1 ou 2, **caractérisé en ce que** les moyens d'éclairage (17, 19) comprennent des éléments caches qui limitent l'éclairage direct par la lumière visible à une zone prédéterminée.

5. Siège passager (1) selon l'une des revendications 1 ou 2, **caractérisé en ce que** les moyens d'éclairage (17, 19) comprennent un élément de guidage de lumière (17).

6. Siège passager (1) selon l'une des revendications précédentes, **caractérisé en ce que** les moyens capteurs comprennent un capteur de rayonnement non visible.

7. Siège passager (1) selon l'une des revendications précédentes, **caractérisé en ce que** les moyens capteurs comprennent une source lumineuse de lumière non visible.

8. Siège passager (1) selon l'une des revendications précédentes, **caractérisé en ce que** les moyens capteurs sont conçus de telle sorte que, lorsqu'un engagement dans la zone prédéterminée est détecté, les moyens d'éclairage (17, 19) sont activés pour l'éclairer.

9. Siège passager (1) selon l'une des revendications précédentes, **caractérisé en ce que** les moyens capteurs sont conçus de telle sorte que, lorsqu'une approche de la zone prédéterminée est détectée, les moyens d'éclairage (17, 19) sont allumés pour l'éclairer.

10. Siège passager (1) selon l'une des revendications précédentes, **caractérisé en ce que** des moyens d'éclairage (17, 19) pour plusieurs zones prédéterminées séparées les unes des autres peuvent être allumés et éteints chacun séparément et indépendamment les uns des autres.

11. Siège passager (1) selon l'une des revendications précédentes, **caractérisé en ce que** le dispositif de contrôle est conçu pour éteindre un éclairage par les moyens d'éclairage (17, 19) après un temps prédéterminé.

12. Siège passager (1) selon l'une des revendications précédentes, **caractérisé en ce que** des moyens de commutation sont prévus avec lesquels les moyens d'éclairage (17, 19) peuvent être réglés manuellement.

13. Siège passager (1) selon l'une des revendications précédentes, **caractérisé en ce que** des moyens de commutation sont prévus avec lesquels une luminosité des moyens d'éclairage (17, 19) peut être réglée.

14. Siège passager (1) selon l'une des revendications précédentes, **caractérisé en ce que** la zone prédéterminée est disposée sous l'assise (4).

15. Siège passager (1) selon l'une des revendications précédentes, **caractérisé en ce que** la zone prédéterminée est un évidement (12) pour une aide à la montée.
